# EUROPÄISCHE PATENTSCHRIFT

(11) **EP 3 020 089 B1**
(45) Veröffentlichungstag und Bekanntmachung des Hinweises auf die Patenterteilung: **08.11.2017**
(21) Anmeldenummer: 14780784.6
(22) Anmeldetag: 19.09.2014
(51) Int. Cl.: H01M 10/39, H01M 10/613, H01M 10/625, H01M 10/66

(54) **VERWENDUNG VON HOCHTEMPERATURBATTERIEN FÜR SCHIFFE**
UTILISATION OF HIGH TEMPERATURE BATTERIES IN SHIPS
UTILISATION DE BATTERIES À HAUT TEMPÈRATURE DANS DES BATEAUX

(30) Priorität: 30.09.2013 DE 102013219726
(43) Veröffentlichungstag der Anmeldung: 18.05.2016
(73) Patentinhaber: Siemens Aktiengesellschaft, 80333 München (DE)
(72) Erfinder: KÜHNE, Michael, 90762 Fürth (DE); WYCISK, Michael, 24248 Mönkeberg (DE)
(86) Internationale Anmeldenummer: PCT/EP2014/069971
(87) Internationale Veröffentlichungsnummer: WO 2015/044042

(56) Entgegenhaltungen:
- DE-C1- 4 433 836
- JP-A- 2013 161 598
- US-A1- 2009 284 228
- US-A1- 2011 318 616
- KLUITERS E C ET AL: "Testing of a sodium/nickel chloride (ZEBRA) battery for electric propulsion of ships and vehicles", JOURNAL OF POWER SOURCES, ELSEVIER SA, CH, Bd. 80, Nr. 1-2, 1. Juli 1999 (1999-07-01) , Seiten 261-264, XP004172837, ISSN: 0378-7753, DOI: 10.1016/S0378-7753(99)00075-0

## Beschreibung

Die Erfindung betrifft die zumindest teilweise Versorgung eines Bordnetzes eines Schiffes mit zumindest einer Batterie.

Derzeit rücken emissionsarm und auch emissionsfrei betriebene Schiffe, insbesondere für den Einsatz auf Binnengewässern, immer stärker in den Fokus, um, insbesondere in Gebieten, in denen die Luftbelastung ohnehin bereits recht hoch ist, diese Belastung zu reduzieren. Auch im Bereich von Hafenanlagen wird z.B. über ordnungspolitische Maßnahmen sichergestellt, dass Emissionen aus Dieselantrieben während der Liegezeit größtmöglich oder vollständig vermieden werden. Die Energie für das Bordnetz kann dabei z.B. über eine elektrische Kabelverbindung zur Hafen-Infrastruktur (abhängig von der Gesamtlänge) hergestellt werden. Alternativ kann diese auch über die Speicherung in Batterien oder über die Umwandlung in Brennstoffzellen emissionsfrei den Verbrauchern zugeführt werden.

Bei dem ausschließlichen oder überwiegenden Einsatz von gespeicherter elektrischer Energie in Schiffen müsste für den Bedarf an thermischer Energie zusätzliche Batteriekapazität, insbesondere in den kalten Jahreszeiten für die Beheizung und in der warmen Jahreszeit für die Kühlung z.B. der Räume, vorgesehen werden. Für die thermische Energie müsste somit zusätzliche Batteriekapazität vorgehalten werden, was sowohl erhebliches spezifisches Gewicht als auch erhebliche Investitions- und Betriebskosten mit sich bringen würde.

Ausschließlich batteriebetriebene Schiffe finden bisher keine kommerzielle Verwendung, wodurch dieses Problem bisher nicht auftritt. Batteriebetriebene Sportboote werden nur dann eingesetzt, wenn das Wetter es zulässt. Bei Mischformen (Hybridantriebe) wird die Wärme heute während des Betriebs aus den Systemen der thermischen Maschinen abgezweigt. Bei längeren Liegezeiten im Hafen können für den thermischen Energiebedarf ggf. thermische Speicher eingebaut werden, welche jedoch neben Kosten auch zusätzliches Gewicht verursachen.

Der Erfindung liegt die Aufgabe zugrunde, eine Batterieversorgung für Schiffe anzugeben, die die genannten Nachteile zumindest reduziert.

Diese Aufgabe wird gelöst durch ein Schiff mit zumindest einer Hochtemperaturbatterie zur zumindest teilweisen Versorgung eines Bordnetzes, deren Abwärme über ein Leitungssystem mittels eines ersten Wärmeträgermediums aus der Batterie herausführbar ist, und mit zumindest einer Absorptionsklimaanlage, deren Speicher mittels der Abwärme regenerierbar ist. Die Aufgabe wird weiter gelöst durch ein Verfahren zur zumindest teilweisen Versorgung eines Bordnetzes eines Schiffes mit zumindest einer Hochtemperaturbatterie, wobei die Abwärme über ein Leitungssystem mittels eines ersten Wärmeträgermediums aus der Batterie herausgeführt wird, und wobei ein Speicher einer Absorptionsklimaanlage des Schiffes mittels der Abwärme regeneriert wird. Beim Einsatz von Hochtemperaturbatterien fällt ein Teil der beim Laden und/oder Entladen umgesetzten elektrischen Energie auf einem erhöhten Temperaturniveau von z.B. 300°C an. Stehen die Batteriezellen in Kontakt zu einem geeigneten Wärmeträgermedium wie z.B. Thermoöl, kann dieses über ein Leitungssystem aus der Batterie nach außen geführt und dort einer konkreten Nutzung zugeführt werden. Erst wenn die zur Verfügung stehende Abwärme für die beabsichtigte Nutzung nicht ausreicht, muss ein Teil der elektrischen Energie auch für direkte Umwandlung in Wärme eingesetzt werden.

Im Energiesystem von zukünftigen "Zero-Emission"-Schiffen bzw. in Schiffen mit geeignetem Batterie-Backup während der "Zero-Emission-Phase" lässt sich die Ausnutzung der gespeicherten Energie und insbesondere das Verhältnis von zu installierender Kapazität zu nutzbarer Energie durch die erfindungsgemäße Lösung verbessern, da der Teil der Energie, die als thermische Energie eingesetzt wird, nicht zusätzlich als elektrische Energie gespeichert werden muss. Die Hochtemperaturbatterien sind aufgrund ihrer gegenüber den Umgebungsbedingungen erhöhten Betriebstemperatur in besonderer Weise au-ßentemperaturunabhängig und erfordern z.B. keine Kühlung wie beispielsweise Lithium-Ionen- oder Bleiakkus. Dabei eignen sie sich aufgrund ihrer relativ hohen volumetrischen Energiedichte ggf. auch zum Austausch vorhandener Bleiaggregate. Vorteile der Hochtemperaturbatterien beim Laden und Entladen (Ladezyklen) z.B. gegenüber von Lithium-Ionen-Batterien können nicht nur genutzt werden, sondern generieren zusätzlichen Mehrwert.

Durch die integrale systemische Einbindung der Batterien (nicht nur Speicher von elektrischer Energie) lässt sich der Gesamtwirkungsgrad von Schiffen mit erheblichem Nutzungsanteil von Energiespeichern verbessern. Gemäß der Erfindung weist das Schiff zumindest eine Absorptionsklimaanlage auf, deren Speicher mittels der Abwärme regenerierbar ist, bzw. wird verfahrensgemäß der Speicher der Absorptionsklimaanlage mittels der Abwärme regeneriert. Somit wird die Abwärme gewissermaßen für die Entwärmung der über die Klimaanlage zugeführten Luft und damit beispielsweise zur Kühlung von Räumen eingesetzt.

In einer weiteren vorteilhaften Ausführungsform weist das Schiff zumindest einem Wärmetauscher auf, mittels dem Wärme vom ersten Wärmeträgermedium auf ein zweites Wärmeträgermedium übertragbar ist, bzw. wird verfahrensgemäß Wärme vom ersten Wärmeträgermedium auf ein zweites Wärmeträgermedium mittels des Wärmetauschers übertragen. Hierdurch wird vom ersten Wärmeträgermedium, das gasförmig oder flüssig sein kann, abgeführte Wärme mittels des Wärmetauschers auf das zweite Wärmeträgermedium übertragen, beispielsweise vom Primärwärmeträger Öl auf Luft oder Wasserdampf, und somit direkt als Prozess- oder Heizenergie zur Verfügung gestellt.

In einer weiteren vorteilhaften Ausführungsform weist das Schiff zumindest ein mittels der Abwärme warmhaltbares Aggregat und/oder eine entsprechende Maschine auf bzw. wird verfahrensgemäß zumindest ein Aggregat und/oder eine Maschine mittels der Abwärme warmgehalten. Hierdurch können diese bei Bedarf auch über längere Zeiträume (solange die Batterien entladen werden) warm und damit betriebsbereit gehalten werden.

Zusammenfassend betrifft die Erfindung die zumindest teilweise Versorgung eines Bordnetzes eines Schiffes mit zumindest einer Batterie. Um hierbei ein gegenüber den bekannten Lösungen besseres Verhältnis von installierter Kapazität zu nutzbarer Energie zu erhalten, wird die Verwendung einer Hochtemperaturbatterie vorgeschlagen, deren Abwärme über ein Leitungssystem mittels eines ersten Wärmeträgermediums aus der Batterie herausgeführt und dort einer weiteren Nutzung zugeführt wird.

## Patentansprüche

1. Schiff mit zumindest einer Hochtemperaturbatterie zur zumindest teilweisen Versorgung eines Bordnetzes, deren Abwärme über ein Leitungssystem mittels eines ersten Wärmeträgermediums aus der Batterie herausführbar ist, mit zumindest einer Absorptionsklimaanlage, deren Speicher mittels der Abwärme regenerierbar ist.

2. Schiff nach Anspruch 1, mit zumindest einem Wärmetauscher, mittels dem Wärme vom ersten Wärmeträgermedium auf ein zweites Wärmeträgermedium übertragbar ist.

3. Schiff nach Anspruch 1 oder 2, mit zumindest einem mittels der Abwärme warmhaltbaren Aggregat und/oder einer entsprechenden Maschine.

4. Verfahren zur zumindest teilweisen Versorgung eines Bordnetzes eines Schiffes mit zumindest einer Hochtemperaturbatterie, wobei die Abwärme über ein Leitungssystem mittels eines ersten Wärmeträgermediums aus der Batterie herausgeführt wird, wobei ein Speicher einer Absorptionsklimaanlage des Schiffes mittels der Abwärme regeneriert wird.

5. Verfahren nach Anspruch 4, wobei Wärme vom ersten Wärmeträgermedium auf ein zweites Wärmeträgermedium mittels eines Wärmetauschers übertragen wird.

6. Verfahren nach Anspruch 4 oder 5, bei dem zumindest ein Aggregat und/oder eine Maschine mittels der Abwärme warmgehalten wird bzw. werden.

## Claims

1. Ship having at least one high-temperature battery for at least partially supplying an electrical system, the waste heat of which battery can be extracted from the battery via pipework by means of a first heat transfer medium, having at least one absorption air conditioning system, the store of which can be regenerated by means of the waste heat.

2. Ship according to claim 1, having at least one heat exchanger by means of which heat can be transferred from the first heat transfer medium to a second heat transfer medium.

3. Ship according to claim 1 or 2, having at least one power unit and/or corresponding machine that can be kept warm by means of the waste heat.

4. Method for at least partially supplying an electrical system of a ship having at least one high-temperature battery, wherein the waste heat is extracted from the battery via pipework by means of a first heat transfer medium, wherein a store of an absorption air conditioning system of the ship is regenerated by means of the waste heat.

5. Method according to claim 4, wherein heat is transferred from the first heat transfer medium to a second heat transfer medium by means of a heat exchanger.

6. Method according to claim 4 or 5, wherein at least one power unit and/or machine is/are kept warm by means of the waste heat.

## Revendications

1. Bateau comprenant au moins une batterie à haute température pour alimenter au moins en partie un réseau de bord, la chaleur perdue de la batterie pouvant en être retirée par un système de conduit, au moyen d'un premier fluide caloporteur, comprenant au moins une installation de conditionnement d'air par absorption, dont l'accumulateur peut être régénéré au moyen de la chaleur perdue.

2. Bateau suivant la revendication 1, comprenant au moins un échangeur de chaleur, au moyen duquel de la chaleur du premier fluide caloporteur peut être transmise à un deuxième fluide caloporteur.

3. Bateau suivant la revendication 1, comprenant au moins un groupe pouvant être maintenu en chaleur au moyen de la chaleur perdue et/ou une machine correspondante.

4. Procédé d'alimentation au moins en partie d'un réseau de bord d'un bateau ayant au moins une batterie à haute température, la chaleur perdue étant retirée de la batterie par un système de conduit au moyen d'un premier fluide caloporteur, dans lequel on régénère, au moyen de la chaleur perdue, un accumulateur d'une installation de conditionnement d'air par absorption du bateau.

5. Procédé suivant la revendication 4, dans lequel on transmet de la chaleur du premier fluide caloporteur à un deuxième fluide caloporteur, au moyen d'un échangeur de chaleur.

6. Procédé suivant la revendication 4 ou 5, dans lequel on maintient en chaleur, au moyen de la chaleur perdue, au moins un groupe et/ou une machine.
